# EUROPEAN PATENT SPECIFICATION

(11) **EP 3 197 280 B1**
(45) Date of publication and mention of the grant of the patent: **08.05.2019**
(21) Application number: 15780774.4
(22) Date of filing: 22.09.2015
(51) Int. Cl.: A01N 63/00

(54) **NEW BACTERIAL STRAINS OF THE SPECIES BACILLUS AMYLOLIQUEFACIENS AND RELATED APPLICATIONS**
NEUE BAKTERIENSTÄMME DER GATTUNG BACILLUS AMYLOLIQUEFACIENS UND ZUGEHÖRIGE ANWENDUNGEN
NOUVELLES SOUCHES BACTÉRIENNES DE L'ESPÈCE BACILLUS AMYLOLIQUEFACIENS ET APPLICATIONS ASSOCIÉES

(30) Priority: 24.09.2014 IT MI20141661
(43) Date of publication of application: 02.08.2017
(73) Proprietor: Biotecnologie B.T. S.r.l., 06059 Todi (PG) (IT)
(72) Inventor: CORANELLI, Simona, 06030 Giano dell'Umbria (PG) (IT); MORANDI, Stefania, 06059 Pantalla di Todi (PG) (IT); FRESCHI, Giorgio, 29121 Piacenza (IT)
(74) Representative: Gerli, Paolo
(86) International application number: PCT/EP2015/071642
(87) International publication number: WO 2016/046155

(56) References cited:
- WO-A1-2013/165607
- WO-A1-2014/066877
- US-A1- 2010 143 316
- US-A1- 2011 230 345
- Innerebner G. et al.(Abst. 1) - Puopolo G. et al. (Abst.2): "LABORATORY AND FIELD TRIALS WITH COMMERCIALLY AVAILABLE BIOCONTROLAGENTS AGAINST FIRE BLIGHT AND BOTRYTIS BUNCH ROT (abst. 1) -THE EFFECT OF TEMPERATURE ON BACILLUS AMYLOLIQUEFACIENS STRAIN S499AND ON ITS INTERACTION WITH CROP PLANTS (abst.2)", Future IPM FUTURE IPM IN EUROPE- Book of Abstracts, 19 March 2013 (2013-03-19), 21 March 2013 (2013-03-21), page 1,3,5, 158 , 176, XP002739282, PalaCongressi - Riva del Garda - Italy Retrieved from the Internet: URL:http://futureipm.eu/content/download/2 496/17830/file/book%20of%20abstracts.pdf [retrieved on 2015-05-06]

## Description

### FIELD OF THE INVENTION

The present invention is in the field of the agronomic sector and particularly in the manufacturing of products having antifungal and antibacterial activity such as for example biopesticides and biocides. Particularly, the invention concerns a bacterial strain of the species *Bacillus amyloliquefaciens*, active in the preventive and/or therapeutic treatment of plant diseases due to pathogens such as fungi or bacteria. The invention also concerns formulations comprising the above-mentioned bacterial strain, as well as their use in the prevention and/or therapy of the above-mentioned diseases.

### STATE OF THE ART

The struggle against infesting microorganisms and the control of their diffusion is an actual and continuously evolving topic in the agriculture field. There are several species related to plant diseases (phytopatogens). Among bacterial species it is possible to mention: *Erwinia amylovora*, several species of the genus *Xanthomonas* as well as of the genus *Pseudomonas,* the species *Pectobacterium carotovorum subsp. carotovorum* and the species *Ralstonia solanacearum;* among the fungal species it is possible to mention: *Fusarium oxysporum, Botrytis cinerea, Monilia laxa, Phytophthora infestans,* as well as the genus *Sclerotinia.*

Particularly, *Sclerotinia minor* is an Ascomycetes fungal phytopathogen causing the typical "collar rot" in lettuce; this microorganism and is able to attack some other cultivations too, such as tomato, celery, carrot, cauliflower, cabbage, flowers of genus *Delphinium,* soy, sunflower, peanut. The disease is characterized by a white and cottony mold developing on the host surface and the nearby soil. From this thick network of mycelia, the fungi bodies soon develop, which then become black and hard: these structures, when ripening, are named sclerotia and are able to survive several years in the soil. *Sclerotinia minor* seldom produces spores; in fact, it often starts colonizing its host by attacking roots or stem at the soil level. Once this particular fungal species attacks the host organism, it causes damages gradually involving the vascular tissue, causing the plant to wither, collapse and die.

Among the bacterial phytopathogens, *Ralstonia solanacearum* is especially worth mentioning. This Gram-negative bacterium attacks plants of the Solanaceae family, typically tomato, potato, eggplant, tobacco, as well as other plants like olive, ginger, etc. Symptoms of infection in tomatoes include flaccid leaves and adventitious roots appearing on the stem; the vascular system exhibits a progressively darker brown colour and lesions may appear on the stem; infected potatoes show wilting and yellowing leaves, as well as overall stunting of the plant and rotten tubers. Due to its devastating lethality, *R.solanacearum* is currently the most intensively studied phytopathogenic bacterium. In the course of time, the need has grown for the development of antifungal and antibacterial products guaranteeing the lowest possible environmental impact and that showing a high and constant efficacy. In fact, the prolonged use of synthetic pesticides is increasingly associated to a diminished efficacy thereof and to pollution phenomena even serious for humans and ecosystems. Consequently, it is of paramount importance to use products based on microorganisms in order to support or replace the traditional chemical products.

An alternative to the synthetic pesticides is represented by the so-called "biological" techniques, namely those exploiting the antagonistic activity of other animal, fungal or bacterial species against the infesting species causing plant diseases.

*Bacillus amyloliquefaciens* is a known bacterium of the genus *Bacillus;* it is ubiquitous and lives in the rhizosphere and on the plant surface. It is a Gram-positive, aerobic bacterium; it was extracted and isolated from soil in 1943 by Fukamoto, in Japan. No phytotoxicity or toxicity episodes have ever been reported for humans. It is used to synthetize enzymes and in the food and biotechnological industry. Its antifungal and antibacterial activity is known, indeed, there is available on the market at least one product for crop protection active to treat fungal and/or bacterial diseases, including that microorganism. Several strains of that bacterial species are used to protect plants against pathogenic fungi or bacteria or to even promote the plant growth.

The action mechanism of *Bacillus amyloliquefaciens* is complex. The bacillus capacity of colonizing the plant is a multifactor process depending on both the plant defense system and the host ability in settling on the surface of the plant itself, occupying its external tissues and growing together with the host organism preventing the insertion of other pathogens by means of competition phenomena. The bacterium is thus able to synthetize enzymes useful for protecting against pathogenic species and then make them available to the plant, in return for a safe and nutrient-rich environment. For example, as known, *Bacillus amyloliquefaciens* can release lipopeptides and proteases weakening fungal membrane and cell wall respectively.

The European patent application no. EP 2179652 describes the selection of some particular strains of *Bacillus amyloliquefaciens* being harmless for humans and environment, but effective against plant bacterial diseases, particularly the so-called "fire blight", a disease affecting *Pome fruits,* including several fruit plants such as pear tree. apple tree and plants of the *Maloideae* subfamily. That disease is caused by the aggression of *Erwinia amylovora*, a particular Gram-negative bacterium of the *Enterobacteriaceae* family.. The peculiar technical characteristic of the described crop protection product is that it includes not only *Bacillus amyloliquefaciens* but also culture solutions thereof containing secondary metabolites with a strong antibacterial effect. The formulation at issue also includes spores of the above-mentioned *Bacillus* guaranteeing a proper activity of the product even after extended storage times. A further feature of this microorganism is its insensitivity to chemical antifungals, while it is not underlined the possibility to use that *Bacillus* against plant diseases caused by fungi.

The international patent application WO 2008/111719, instead, describes new strains of *Bacillus amyloliquefaciens* active in inhibiting pathogenic or enteropathogenic microorganisms which are resistant to antibiotics. That document aims to protect both the *Bacillus* cultivations supernatant and the antibacterial metabolites present therein.. The inhibiting compositions inhibiting the growth of antibiotic-resistant microorganisms can be either food or food additives.

An important reference crop protection product, available on the market and widely used in the sector, is Amylo-X (Biogard), an antifungal and antibacterial microbiological formulation based on *Bacillus amyloliquefaciens* subsp. *plantarum* (stain D747), having a broad spectrum of activity against several fungi and bacteria.

However, the general availability of products having a "broad spectrum" does not satisfy the needs of the operators in the sector: indeed, there is a large interest in products having strong activity against specific species, in addition to a general broad spectrum of activity, so as to provide a specific treatment against the corresponding infections, while maintaining a medium/strong activity against phytopathogenic microorganisms in general at the same time: for example, considering the frequent growing of lettuce next to plants of the Solanaceae family (tomatoes, potatoes, eggplants) in vegetable gardens, it would be interesting to have available a product with strong activity on typical pathogens of lettuce (*Sclerotinia minor*) and of Solanaceae (*Ralstonia solanacearum*), while at the same time keeping a suitable level of activity on a broad range of other vegetable pathogens. Moreover, with an eye to the growing care for the environment and the involved ecosystems, there is the need for highly active products, useful to reduce the amount of agent being administered.

### SUMMARY

In addressing the above-underlined needs, the Applicant now isolated new bacterial strains, belonging to the species *Bacillus amyloliquefaciens,* effective against a broad spectrum of plant diseases caused by fungi and/or bacteria and provided with specific selectivity characteristics, useful in order to integrate and improve the range of products currently available in the sector.

Specifically, the present invention concerns a new bacterial strain of the species *Bacillus amyloliquefaciens* having deposit number DSMZ 29231 and herein identified as BOT SPO. This strain is effective for treatments in the agronomic field, particularly in the prevention and/or treatment of plant diseases caused by fungi and/or bacteria. The preferably treated fungal species are: *Fusarium oxysporum lycopersici, Botrytis cinerea, Monilia laxa, Phytophthora infestans and Sclerotinia minor;* the preferably treated bacterial species are: *Erwinia amylovora, Xanthomonas campestris pv. vesicatoria, Pseudomonas syringae pv. actinidiae, Pseudomonas syringae pv. syringae, Pseudomonas syringae pv. tomato, Pectobacterium carotovorum subsp. carotovorum, Ralstonia solanacearum.* The most preferably treated pathogens are the fungal Ascomycetes species *Sclerotinia minor* and the bacterial species *Ralstonia solanacearum.* The invention concerns the said bacterial strain as such; it also concerns its antibacterial and/or antifungal formulations in presence of possible co-formulants and adjuvants, and its use in the treatment and/or prevention of plant diseases caused by bacteria and/or fungi.

### DETAILED DESCRIPTION OF THE INVENTION

A first object of the present patent application concerns the above-mentioned new bacterial strain of species *Bacillus amyloliquefaciens,* having deposit number DSMZ 29231 and herein identified as BOT SPO: the belonging of this strain to the species *Bacillus amyloliquefaciens* has been proved by the Applicant by means of genetic analysis. As proved by laboratory experiments shown in the following, this strain was found effective to hinder and/or inhibit the growth of bacterial and fungal cultures.

A second object of the present patent application concerns compositions including the bacterial strain BOT SPO, as previously reported. Therefore, this bacterial strain is the active ingredient of compositions additionally including co-formulants, adjuvants and any other useful excipient. The compositions can be liquid, solid (e.g. granular) or of any other nature.

The co-formulant can be for example a solvent or a solid filler. When the composition is liquid, the solvent can be for example of an aqueous type, a mineral oil derivative, etc. When the composition is solid, the co-formulant can be for example a clay, a silicate, a carbonate, an organic powder from vegetal biomasses, etc. Among clays, for example, talc, diatomaceous earth, kaolin, attapulgite, etc. can be used; among organic powders, there are, for example, grinded rice or coconut husk, etc.

The adjuvants can be for example surfactants, rheological additives, wetting agents, moistening agents, stickers, antifoam additives, buffer solutions, activators, dispersion agents, coating agents, coloring agents, UV stabilizers, antioxidants, etc.

The compositions object of the present patent application can also include further chemical substances such as starches, sugars or aqueous solutions thereof.

The solid compositions including the strain BOT SPO can also be of a granular type; the granules can be dispersible and/or suspendible in aqueous solutions such as tap water or can be used in that form by spreading them directly on the soil. The granulation process can be by rotating platter, extrusion, fluid bed or spray drying.

The compositions including the strain BOT SPO can include the above-mentioned microorganisms as such, or their derivatives, particularly spores or metabolites (e.g. proteins and enzymes derived from fermentation of the microorganism at issue) obtained from said strains or mixtures. Therefore, for the present application, the term BOT SPO equally refers to the microorganism at issue as such or to its derivatives, particularly spores or metabolites.

The compositions including the strain BOT SPO can also include one or more further active ingredients with activity and purpose being the same of or different from that of the bacterial strains that are the object of the present patent application; for example, they can include other species of microorganisms and/or pesticides against microorganisms or animal species infesting vegetal species. Further by way of example, the formulation including said bacterial strains can include one or more fertilizing molecules.

A third object of the present invention is the use of said bacterial strain, as well as the compositions including the same, for applications in the agronomic field. Specifically, the strain BOT SPO is effective against plant diseases associated to fungal or bacterial contaminations.

Therefore, the invention can be used in the preventive and/or therapeutic treatment of bacterial and/or fungal contaminations of plants, ornamental plants, fruit plants, fruits, vegetables, cereals, roots, rhizomes, tubers, bulbs, seeds and all the plants intended for the food supply chain. Preferably, the strain BOT SPO of said *Bacillus amyloliquefaciens* is used in the treatment against the fungal genera *Fusarium spp, Botrytis spp, Monilia spp, Phytophthora spp, Sclerotinia spp* and against the bacterial genera *Erwinia spp, Xanthomonas spp, Pseudomonas spp, Pectobacterium spp, Ralstonia spp.*

More preferably, it is used against fungal species *Fusarium oxysporum lycopersici, Botrytis cinerea, Monilia laxa, Phytophthora infestans, Sclerotinia minor.*

Most preferably, it is used against the Ascomycetes fungal species *Sclerotinia minor.* Regarding the bacterial pathogens, the strain BOT SPO of said *Bacillus amyloliquefaciens* is preferably used in the treatment against genera *Erwinia spp, Xanthomonas spp, Pseudomonas spp, Pectobacterium spp, Ralstonia spp.*

More preferably, it is used against bacterial species: *Erwinia amylovora*, *Xanthomonas campestris pv. vesicatoria, Pseudomonas syringae pv. actinidiae, Pseudomonas syringae pv. syringae, Pseudomonas syringae pv. tomato, Pectobacterium carotovorum subsp. carotovorum, Ralstonia solanacearum.*

Most preferably, it is used against the Gram negative bacterium *Ralstonia solanacearum.*

Several vegetal species are vulnerable to diseases caused by the above-listed pathogens being an object of treatment according to the present invention. Among them, for example, lettuce and the like, carrot, celery, eggplant, capsicum, tomato, strawberry, kiwi, apple tree, pear tree, grapevine, soy, sunflower, peanut, etc. are cited.

As reported in the *in-vitro* tests described in the experimental part, the strain BOT SPO is effective in struggling against and inhibiting the growth of all the above-listed pathogenic species both bacterial and fungal.

Particularly, it was found strongly effective in preventing the growth of colonies of the Ascomycetes fungus *Sclerotinia minor,* a widely spread and very resistant species infecting lettuce and a few other selected vegetables.

Moreover, the strain BOT SPO has been particularly effective in preventing the growth of fungus *Phytophthora infestans.*

As regards to antibacterial applications, the strain being object of the invention showed a generally high activity against all the tested bacterial species, most of the times also exceeding the activity of the commercial reference product.

In more advanced greenhouse tests, the strain BOT SPO showed a strong effect in reducing the incidence and severity of infection from *Sclerotinia minor,* in further greenhouse tests on tomatoes, they also proved strongly effective in reducing the incidence and severity of infection from *Ralstonia solanacearum.*

The above results, in particular those obtained in greenhouse, support the treatment, via a single product, of specific infections affecting lettuce and Solanaceae plants like tomatoes, potatoes, eggplants; this is of particular interest considering that such vegatables usually grow next to each other in vegetable gardens; therefore with the present invention the soil area containing these plants advantageously receives an infections-targeted product, spreadable via a single irroration step; the use is particularly effective in reducing the incidence and severity of these infections. This biopesticide treatment can be carried out by foliar application or by drip irrigation, in particular the last one is preferable due to the low environmental impact, also in mix with other chemical pesticides.

Therefore, in one preferred embodiment, the present invention includes the use of the present strain of *Bacillus amyloliquefaciens* BOT SPO for treating or preventing (tipically via foliar application or by drip irrigation) plant infections from microorganisms selected of *Sclerotinia minor* and/or *Ralstonia solanacearum;* preferably, said infections affect plants selected as lettuce and tomatoes.

In summary, the strain BOT SPO of the species *Bacillus amyloliquefaciens* having deposit number DSMZ 29231, is widely effective in treating bacterial and/or fungal diseases caused by a broad range of pathogens being associated to diseases that are responsible for death or anomalous growth of important vegetal species. Moreover, it also shows selectivity characteristics, which make it particularly useful against some infections that are not easy to treat.

The invention is described in the following by way of the following nonlimiting experimental examples.

### EXPERIMENTAL PART

### 1. Design of experiments

Experiments have been carried out in order to evaluate the effect of BOT SPO against the fungal species: *Fusarium oxysporum lycopersici* (Foi), *Botrytis cinerea* (Bc), *Monilia laxa* (M1), *Phytophthora infestans* (Pi), *Sclerotinia minor* (Sm), and bacterial species *Erwinia amylovora* (Ea), *Xanthomonas campestris pv. vesicatoria* (Xv), *Pseudomonas syringae pv. actinidiae* (Psa), *Pseudomonas syringae pv. syringae* (Pss), *Pseudomonas syringae pv. tomato* (Pst), *Pectobacterium carotovorum subsp. carotovorum* (Pcc), *Ralstonia solanacearum.*

Tests have been carried out in parallel with a reference test using Amylo-X, i.e. a standard commercial crop protection product containing *Bacillus Amyloliquefaciens* as active agent, characterized by a broad activity range on-the-field against bacterial and fungal species, is among the most used products in this area. In all tests, the non-treated pathogenic microorganism has been used as a control. All tests, including the reference ones, have been carried out in the same culture environment, temperature, time and humidity conditions. Tests have been carried out twice (for the antifungal activity) or three times (for the antibacterial activity); the results being shown are the average of the experimental values being found.

Tests have been carried out as follows: in dedicated Petri plates, by means of a standard procedure, the antagonist strains have been inoculated in a proper culture medium and with a standard quantity of the phytopathogenic microorganism under examination: the microorganism has been inoculated 48 hours after the antagonist. After a preset incubation period, the antifungal activity of the two antagonist strains has been evaluated by measuring the colony diameters associated to the pathogen growth. The antifungal activity has been evaluated by measuring the diameter of the related inhibiting areola.

### 2. Results

### 2.1 Evaluation of the antifungal activity of strain BOT SPO of Bacillus Amyloliquefaciens by means of in vitro tests.

Table 1 reports the results obtained from measurements of fungal colonies diameters following the above-described treatment. The *percentage of fungal activity inhibition* (ICF) with respect to the control test has been evaluated by means of the formula: ICF = 100 - [(diameter of treated colony /diameter of non-treated colony) x 100]; an ICF value equal to 100 means that no fungal growth has been observed, therefore the antifungal activity of the biopesticide is equal to 100%; on the contrary, an ICF value equal to 0 means that the antifungal activity of the product is irrelevant.

**Table 1; treatment of diseases caused by fungal species. Foi, Fusarium oxysporum lycopersici; BC, Botrytis cinerea; M1, Monilia laxa; Pi, Phytophthora infestans; Sm, Sclerotinia minor. Values shown as ICF.**

| | Foi | Bc | Ml | Pi | Sm |
|---|---|---|---|---|---|
| Amylo-X | 90 | 100 | 100 | 69.1 | 77.2 |
| Bot SPO | 87.8 | 100 | 100 | 100 | 78.3 |

Table 1 shows that the bacterial strain BOT SPO is effective in inhibiting the growth of fungal cultures of the above-mentioned species. Particularly, the bacterial strain BOT SPO is particularly effective in preventing the growth of *Sclerotinia minor* colonies, also showing a higher effectiveness than the reference crop protection product, Amylo-X. Moreover, BOT SPO showed a high activity against *Phytophthora infestans,* widely exceeding the activity of the reference crop protection product.

### 2.2 Evaluation of the antibacterial activity of strains BOT SPO of Bacillus Amyloliquefaciens by means of in vitro tests.

Table 2 reports the treatment results obtained by the measurements of the inhibiting areola diameters of the bacterial growth of the phytopathogenic species following the above-mentioned treatment. The existence of an inhibiting areola in the inoculum area of the antagonist shows the capacity of the same to inhibit the pathogen growth. Values are expressed in centimeters: higher inhibiting areola diameter values show that no growth of pathogenic bacteria has been observed, therefore the product has a high antimicrobial activity; consequently, the higher that value, the more effective the product under examination in hindering the growth of the phytopathogenic bacterium at issue.

**Table 2: Treatment of bacterial diseases. Psa, Pseudomonas aeruginosa; Pst, Pseudomonas syringae pv. tomato; Pss, Pseudomonas syringae pv. syringae; Xv, Xanthomonas vesicatoria; Ea, Erwinia amylovora; Pcc, Pectobacterium carotovorum subs. Carotovorum; Ralst, Ralstonia.**

| | Psa | Pst | Pss | Xv | Ea | Pcc | Ralst |
|---|---|---|---|---|---|---|---|
| Amylo-X | 4.6 | 3.1 | 3.8 | 6.1 | 7.2 | 5.6 | 5.3 |
| Bot SPO | 6 | 4.4 | 4.5 | 7.4 | 7.2 | 6.4 | 8.5 |

Table 2 shows that the bacterial strain BOT SPO is effective in treating the bacterial cultures of the above-mentioned species. Particularly, the bacterial strain BOT SPO is much more effective than Amylo-X against the phytopathogenic bacterial cultures being tested.

### 3. Greenhouse testing on lettuce infected with Sclerotinia minor

The objective of the study was to test the effect of the strains of the present invention on infection from *Sclerotinia minor* on lattuce cultivations in greenhouse, under controlled climatic conditions.

The trial was carried out with the present strain BOT SPO; in parallel, the reference market product Amylo-X containing as active ingredient *Bacillus Amyloliquefaciens,* was tested in the same conditions. The experimental design is described in the table 3.

**Table 3: Greenhouse treatment of lettuce infected with Sclerotinia minor: experimental design**

| **Test item** | **Test item concentration** | **Replicates** | **Pathogen concentration** |
|---|---|---|---|
| | | | |
| BOT SPO | 2*10¹⁴ CFU/mL | 3 repl. of 3 plants | 10⁶ CFU/mL |
| BOT SPO | 2*10¹⁰ CFU/mL | 3 repl. of 3 plants | 10⁶ CFU/mL |
| AMYLO-X* | 1*10¹⁴ CFU/mL | 3 repl. of 3 plants | 10⁶ CFU/mL |

| | | | |
|---|---|---|---|
| * The Commercial product concentration is the one reported in the label | | | |

### Test item preparation

The test items were grown in TSA agar at 30°C for 78 hours. Then, the creams were collected in tubes in half weight of a solution of glycerol 15% w/w and stored at -20°C. The cells number was evaluated by CFU determination. The test items solutions were prepared in field with tap water at the two concentrations. indicated in table 3.

### Preventive application of test items and reference product

24 hours before application of the pathogen the test items and reference product were applied by spraying the suspension on leaves. Test items and reference product were applied in the late afternoon; the relative humidity in the greenhouse was maintained to 95%.

### Pathogen preparation

*Sclerotinia minor* was grown in PDA agar at 25°C for 1 week and the conidial cells were collected in tubes. The cells number was evaluated by direct count to the microscope. The pathogen solution was prepared in the field with tap water at the concentrations indicated in table 3.

### Pathogen application

The pathogen was applied 24 hours after the test items and reference product application, spraying the suspension on leaves. The application was made in the late afternoon; the relative humidity in the greenhouse was maintained at 95% for the next 24 hours and thereafter lowered to 65%.

The inoculated plants were maintained in greenhouse at 20±3°C, with a photoperiod of 16 hours light /8 hours darkness.

The effects were assessed after 4 weeks from the pathogen application. They were calculated as percent of incidence of the infection throughout the treated area (number of diseased plants/total treated plants) and severity of disease (% of manifestation of the disease).

Statistical analysis was performed by the program ANOVA/MANOVA. The obtained results are shown in the following table 4.

**Table 4: Greenhouse treatment of lettuce infected with Sclerotinia minor: results**

| **Test item** | **Test item concentration** | **Incidence %** | **Severity %** |
|---|---|---|---|
| | | | |
| BOT SPO | 2*10¹⁴ CFU/mL | 28.57 | 15.92 |
| BOT SPO | 2*10¹⁰ CFU/mL | 50.00 | 61.90 |
| AMYLO-X | 1*10¹⁴ CFU/mL | 100.00 | 61.90 |
| Disease control | | 92.31 | 100.00 |

These results show that *Bacillus amyloliquefaciens* strain BOT SPO obtains a remarkable biocontrol against *Sclerotinia minor,* with effects largely exceeding those yielded by the market reference Amylo-X.

### 4. Greenhouse testing on tomatoes infected with Ralstonia solanacearum

The objective of the study was to test the effect of the strains of the present invention on bacterial infection from *Ralstonia solanacearum* on tomato plants cultivations in greenhouse, under controlled climatic conditions.

The trial was carried out with the present stain BOT SPO; in parallel, the reference market product Amylo-X was tested in the same conditions. The experimental design is described in the table 5.

**Table 5: Greenhouse treatment of tomato infected with Ralstonia solanacearum: experimental design**

| **Test item** | **Test item concentration** | **Replicates** | **Pathogen concentration** |
|---|---|---|---|
| | | | |
| BOT SPO | 2*10¹⁴ CFU/mL | 3 repl. of 3 plants | 10⁶ CFU/mL |
| BOT SPO | 2*10¹⁰ CFU/mL | 3 repl. of 3 plants | 10⁶ CFU/mL |
| AMYLO-X | 1*10¹⁴ CFU/mL | 3 repl. of 3 plants | 10⁶ CFU/mL |
| Disease control | | 3 repl. of 3 plants | 10⁶ CFU/mL |

### Test item preparation

The test items were grown in TSA agar at 30°C for 78 hours. Then, the creams were collected in tubes in half weight of a solution of glycerol 15% w/w and stored at -20°C. The cells number was evaluated by CFU determination. The test items solutions were prepared in field with tap water at the two concentrations indicated in table 5

### Preventive application of test items and reference product

24 hours before application of the pathogen the test items and reference product were applied by spraying the suspension on leaves. Test items and reference product were applied in the late afternoon; the relative humidity in the greenhouse was maintained to 95%.

### Pathogen preparation

*Ralstonia solanacearum* was grown in TSA agar at 25°C for 24 hours and the cells were collected in tubes. The cells number was evaluated by direct count to the microscope. The pathogen solution was prepared in the field with tap water at the concentrations indicated in table 5.

### Pathogen application

The pathogen was applied 24 hours after the test items and reference product application, spraying the suspension on leaves. The application was done in the late afternoon; the relative humidity in the greenhouse was maintained at 95% for the next 24 hours and thereafter lowered to 65%.

The inoculated plants were maintained in the greenhouse at 20±3°C, with a photoperiod of 16 hours light / 8 hours darkness.

The effects were assessed after 2 weeks from the pathogen application. They were calculated as percent of incidence of the infection throughout the treated area (number of diseased plants/total treated plants) and severity of disease (% of manifestation of the disease).

Statistical analysis was performed by the program ANOVA/MANOVA. The obtained results are shown in the following table 6.

**Table 6: Results of greenhouse treatment of tomato infected with Ralstonia solanacearum**

| **Test item** | **Test item concentration** | **Incidence %** | **Severity %** |
|---|---|---|---|
| | | | |
| BOT SPO | 2*10¹⁴ CFU/mL | 44.83 | 30.98 |
| BOT SPO | 2*10¹⁰ CFU/mL | 51.64 | 40.79 |
| AMYLO-X | 1*10¹⁴ CFU/mL | 95.82 | 138.75 |
| Disease control | | 100.00 | 100 |

These results show that *Bacillus amyloliquefaciens* strain BOT SPO obtains a remarkable biocontrol against *Ralstonia solanacearum,* with effects largely exceeding those yielded by the market reference product.

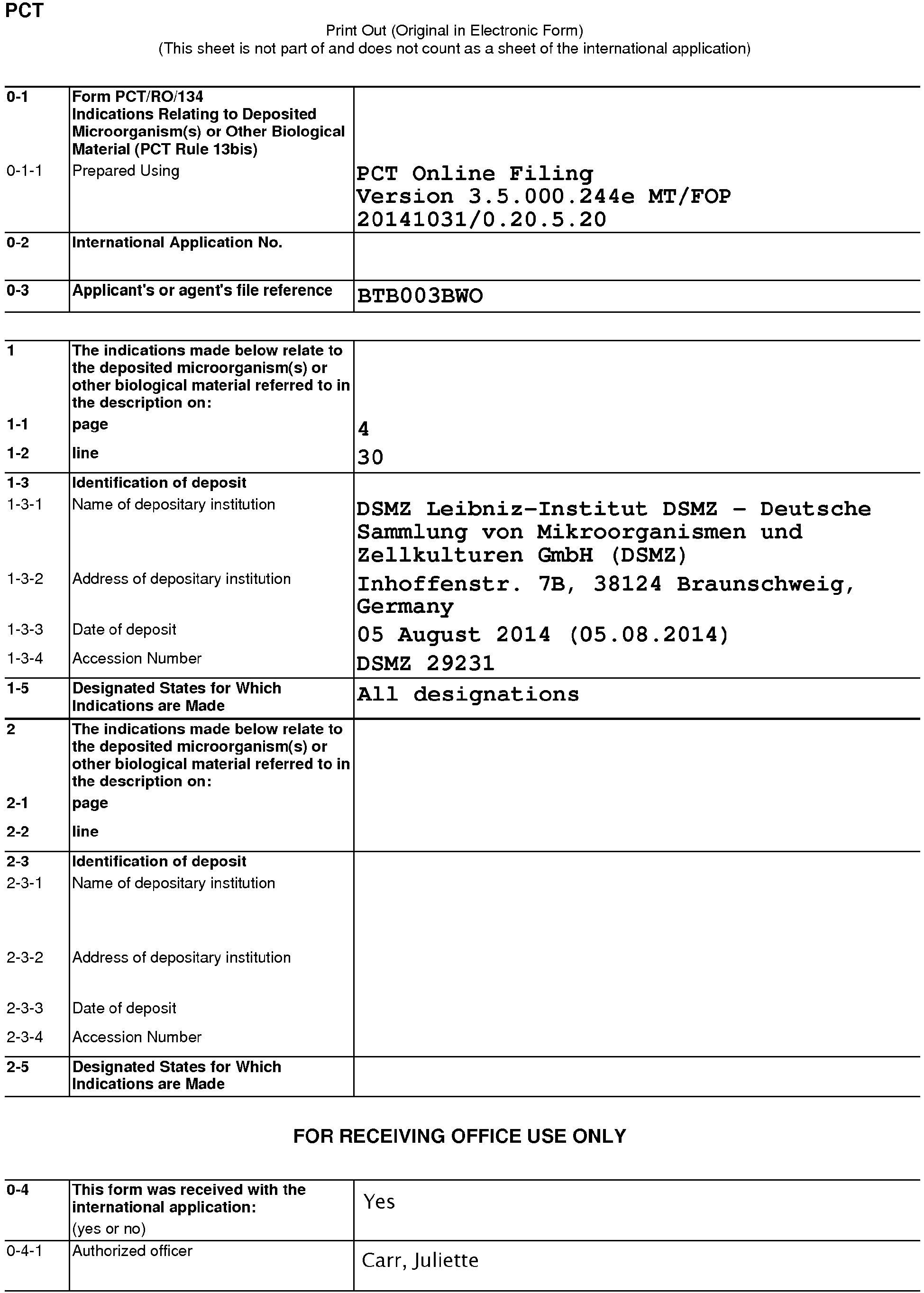

## Claims

1. Strain BOT SPO of *Bacillus amyloliquefaciens* having deposit number DSMZ 29231.

2. Bactericide and/or fungicide preparation comprising the strain BOT SPO as described in claim 1, in presence of possible co-formulants and adjuvants useful in the agronomic field.

3. Preparation according to claim 2, wherein said BOT SPO is present in form of spores thereof.

4. Preparation according to claims 2-3, comprising a pesticide.

5. Use of the strain or preparations described in claims 1-4 in the treatment or prevention of plant fungal and/or bacterial infections in the agronomic field.

6. Use according to claim 5, wherein said infections are caused by one or more of the fungal genera *Fusarium, Botrytis, Monilia, Phytophthora, Sclerotinia* and/or one or more of the bacterial genera *Erwinia, Xanthomonas, Pseudomonas, Pectobacterium, Ralstonia.*

7. Use according to claim 6, wherein said infections are caused by one or more microorganisms selected from: *Fusarium oxysporum lycopersici, Botrytis cinerea, Monilia laxa, Phytophthora infestans, Sclerotinia minor, Erwinia amylovora, Xanthomonas campestris pv. vesicatoria, Pseudomonas syringae pv. actinidiae, Pseudomonas syringae pv. syringae, Pseudomonas syringae pv. tomato, Pectobacterium carotovorum subsp. carotovorum, Ralstonia solanacearum.*

8. Use according to claim 7, wherein said infections are caused by microorganisms including *Sclerotinia minor* and/or *Ralstonia solanacearum.*

9. Use according to claim 8, where said infections affect plants including lettuce and tomatoes.

10. Use according to claims 5-9, where said treatment or prevention reduces the incidence and severity of said infection.

## Patentansprüche

1. Bacillus amyloliquefaciens-Stamm BOT SPO mit der Hinterlegungsnummer DSMZ 29231.

2. Bakterizides und/oder fungizides Präparat aufweisend den Stamm BOT SPO wie beschrieben in Anspruch 1, in Gegenwart möglicher Co-Formulierungsmittel und Hilfsstoffe, die auf dem agronomischen Gebiet nützlich sind.

3. Präparat nach Anspruch 2, wobei der BOT SPO in Form seiner Sporen vorliegt.

4. Präparat nach den Ansprüchen 2 bis 3, ein Pestizid aufweisend.

5. Verwendung des Stammes oder der Präparate, der bzw. die in den Ansprüchen 1 bis 4 beschrieben ist bzw. sind, bei der Behandlung oder Prävention von Pflanzen-Pilzbefall und/oder Pflanzen-Bakterienbefall auf dem agronomischen Gebiet.

6. Verwendung nach Anspruch 5, wobei der Befall verursacht ist von einer oder mehreren der Pilzgattungen Fusarium, Botrytis, Monilia, Phytophthora, Sclerotinia und/oder von einer oder mehreren der Bakteriengattungen Erwinia, Xanthomonas, Pseudomonas, Pectobacterium, Ralstonia.

7. Verwendung nach Anspruch 6, wobei der Befall verursacht ist von einem oder mehreren Mikroorganismen, die ausgewählt sind aus: Fusarium oxysporum lycopersici, Botrytis cinerea, Monilia laxa, Phytophthora infestans, Sclerotinia minor, Erwinia amylovora, Xanthomonas campestris pv. vesicatoria, Pseudomonas syringae pv. actinidiae, Pseudomonas syringae pv. syringae, Pseudomonas syringae pv. tomato, Pectobacterium carotovorum subsp. carotovorum, Ralstonia solanacearum.

8. Verwendung nach Anspruch 7, wobei der Befall von Mikroorganismen verursacht ist, zu denen Sclerotinia minor und/oder Ralstonia solanacearum gehören.

9. Verwendung nach Anspruch 8, wobei der Befall Pflanzen betrifft, zu denen Salat und Tomaten gehören.

10. Verwendung nach den Ansprüchen 5 bis 9, wobei die Behandlung oder Prävention die Häufigkeit und Schwere des Befalls verringert.

## Revendications

1. Souche BOT SPO de *Bacillus amyloliquefaciens* ayant le numéro de dépôt DSMZ 29231.

2. Préparation bactéricide et/ou fongicide comprenant la souche BOT SPO selon la revendication 1, en présence d'éventuels coformulants et adjuvants utiles dans le domaine agronomique.

3. Préparation selon la revendication 2, dans laquelle ladite BOT SPO est présente sous la forme de spores de celle-ci.

4. Préparation selon les revendications 2 et 3, comprenant un pesticide.

5. Utilisation de la souche ou des préparations décrites dans les revendications 1 à 4 dans le traitement ou la prévention d'infections fongiques et/ou bactériennes de végétaux dans le domaine agronomique.

6. Utilisation selon la revendication 5, dans laquelle lesdites infections sont causées par un ou plusieurs des genres fongiques *Fusarium, Botrytis, Monilia, Phytophthora, Sclerotinia* et/ou un ou plusieurs des genres bactériens *Erwinia, Xanthomonas, Pseudomonas, Pectobacterium, Ralstonia.*

7. Utilisation selon la revendication 6, dans laquelle lesdites infections sont causées par un ou plusieurs microorganismes choisis parmi : *Fusarium oxysporum lycopersici, Botrytis cinerea, Monilia laxa, Phytophthora infestans, Sclerotinia minor, Erwinia amylovora*, *Xanthomonas campestris pv. vesicatoria, Pseudomonas syringae pv. actinidiae, Pseudomonas syringae pv. syringae, Pseudomonas syringae pv. tomato, Pectobacterium carotovorum subsp. carotovorum, Ralstonia solanacearum.*

8. Utilisation selon la revendication 7, dans laquelle lesdites infections sont provoquées par des microorganismes incluant *Sclerotinia minor* et/ou *Ralstonia solanacearum.*

9. Utilisation selon la revendication 8, où lesdites infections affectent des végétaux comprenant les laitues et les tomates.

10. Utilisation selon les revendications 5 à 9, où ledit traitement ou ladite prévention réduit l'incidence et la gravité de ladite infection.
